# EUROPÄISCHE PATENTSCHRIFT

(11) **EP 0 512 266 B1**
(45) Veröffentlichungstag und Bekanntmachung des Hinweises auf die Patenterteilung: **27.07.1994**
(21) Anmeldenummer: 92105959.8
(22) Anmeldetag: 07.04.1992
(51) Int. Cl.: B65G 47/36, B65G 47/61

(54) **Hängeförderer für auf Bügel hängendes Transportgut**
Overhead conveyor for goods conveyed on hangers
Convoyeur aérien pour des marchandises transportées sur cintres

(30) Priorität: 02.05.1991 DE 4114283
(43) Veröffentlichungstag der Anmeldung: 11.11.1992
(73) Patentinhaber: DÜRKOPP ADLER AKTIENGESELLSCHAFT, D-33719 Bielefeld (DE)
(72) Erfinder: Kuhlmann, Walter, W-4937 Lage (DE); Niesen, Klaus, W-4800 Bielefeld 1 (DE)
(74) Vertreter: Rehmann, Klaus-Thorsten, Dipl.-Ing.

(56) Entgegenhaltungen:
- EP-A- 0 307 045
- DE-U- 9 001 626

## Beschreibung

Die Erfindung betrifft einen Hängeförderer für auf Bügel hängendes Transportgut nach dem Oberbegriff des Anspruchs 1.

Solche Hängeförderer werden beispielsweise in Konfektionsbetrieben verwendet, um die Kleidungsstücke zu Lagerplätzen bzw. Abtransportstellen zu transportieren, oder Arbeitsstücke zu einer Reihe von Arbeitsstationen zu transportieren, wo jeweils unterschiedliche Arbeitsgänge an den halbfertigen Produkten ausgeführt werden.

Hierzu sind einzelne Abgabestellen innerhalb des Hängeförderers vorgesehen, an denen die Bügel, die die Kleidungsstücke tragen, aus dem Hauptförderstrang ausgeschleust werden können, um zu einem sich in einem Nebenstrang befindlichen Arbeitsplatz oder aber zu der Speicherstelle zu gelangen. Die DE-A-17 81 310 offenbart einen Hängeförderer, bei dem die Kleidungsstücke von auf Rollen laufenden Klammern entlang einer Schienenstrecke transportiert werden können.

Die EP-A-0 307 045 (entspricht US-A-4,909,373) offenbart einen Hängeförderer für auf Bügel hängende Kleidungsstücke, bei dem jeweils ein Kleiderbügel in eine Trägervorrichtung eingehängt ist. In dieser Trägervorrichtung werden die Kleidungsstücke in dem Hauptförderstrang des Förderers transportiert. Innerhalb des Förderers sind Abgabestellen vorgesehen, an der die Bügel aus der Hauptförderrichtung abgenommen und in einen Nebenstrang oder eine Abgabestelle geschleust werden können. Um den Bügel abnehmen zu können, wird die Einhängevorrichtung geöffnet, und der Bügel fällt durch sein Eigengewicht auf eine nach unten geneigte Auffangstange und gleitet hieran entlang, bis er an seinem Bestimmungsort angelangt ist.
Bei der Auslegung eines solchen Hängeförderers ist man bestrebt, die Austragstelle in Richtung der Öffnung des Bügelhakens erfolgen zu lassen, weil dann die Auffangstange nicht so ausgestaltet sein muß, daß sie aus der Transportrichtung weg schwenkbar ist, sondern Bügel die an einer Austragstelle nicht ausgetragen werden sollen, die Stange mit der Bügelöffnung passieren können.

Um die Funktionsfähigkeit eines Hängeförderers mit einer derart ausgebildeten Austragstelle zu gewährleisten, muß der Bügelhaken relativ lang ausgebildet sein, damit nicht auszutragende Bügel, insbesondere wenn die Kleidungsstücke auf ihnen hängen, unterhalb der Auffangstange entlang transportiert werden können, ohne an diese anzustoßen. Bei Kleiderbügeln mit kurzen Bügelhaken, so wie sie beispielsweise zum Aufhängen von Hosen verwendet werden, wobei der Hosenbund zwischen zwei Drahtbügeln eingeklemmt wird, ist der Bügelhaken in aller Regel zu kurz ausgebildet.
Hierdurch geraten die Hosen mit dem überstehenden Bund an die Auffangstange, wodurch sich entweder die Bügel aufschaukeln und ein sicherer Weitertransport nicht mehr gewährleistet ist, oder aber es besteht die Gefahr, daß der überstehende Hosenbund verschmutzt.

Die zur Gattungsbildung herangezogene DE-B-18 04 775 offenbart eine zweiteilige Abnahmevorrichtung für einen Hängeförderer, die nach Art einer Weiche in die Transportbahn der Bügelhaken geschwenkt werden kann. Wenn das Weichenoberteil hochgeschwenkt ist, können die auf der Förderschnecke transportierten Bügelhaken die Abgabestelle ungehindert passieren. Bei nach unten geschwenktem Oberteil ist die Abnahmevorrichtung geschlossen und an diese herantransportierte Bügelhaken werden zwangsweise von der Förderschnecke weggeführt.

Auch hierbei muß, um die Funktionsfähigkeit zu gewährleisten, der Bügelhaken relativ lang ausgebildet sein. Außerdem wird der Bügelhaken durch das Weichenoberteil angehoben bevor er in den anderen Förderstrang abgegeben wird. Die Transportbahn verläuft folglich für eine bestimmte Strecke schräg nach oben. Die Überwindung des Höhenunterschiedes kann nur durch die den Bügeln inhärente kinetische Energie erfolgen, so daß zur Funktionsfähigkeit eine bestimmte Transportgeschwindigkeit nicht unterschritten werden darf.

Der Erfindung liegt daher die Aufgabe zugrunde, einen gattungsgemäßen Hängeförderer so fortzubilden, daß auch Bügel mit kurzem Bügelhaken sicher an der Austragstelle vorbeitransportiert werden können, wenn sie nicht ausgeschleust werden sollen und das Ausschleusen der Bügel unabhängig von der Transportgeschwindigkeit ist.

Die Lösung der Aufgabe erfolgt erfindungsgemäß durch die kennzeichnenden Merkmale des Anspruchs 1.

Vorteilhaft hieran ist, daß die Auffangstange in ihrer Ruhestellung zur Transportrichtung waagerecht oder sogar schräg nach oben weisen kann, so daß auch Bügel mit kurzen Kleiderhaken ungehindert die Abgabestelle passieren können und nur dann, wenn tatsächlich ein Bügel ausgeschleust werden soll, die Abgabestange nach unten bewegt wird, so daß eine schräg nach unten verlaufende Ebene sich einstellt, an der der Bügelhaken entlang gleiten kann.

Die Ausgestaltung nach Anspruch 2 gewährleistet, daß der Ausleger selbsttätig in seine Ruhestellung gezogen wird.

Mit der Fortbildung nach Anspruch 3 ist es möglich, daß die notwendige Kraft, die auf den Ausleger einwirken muß, um diesen in seiner Arbeitsstellung zu verbringen, eingestellt werden kann.

Anspruch 4 gibt eine vorteilhafte Ausbildung zur Einstellbarkeit der Verstellkraft an.

Die Fortbildung der Erfindung nach Anspruch 5 stellt sicher, daß schon das Gewicht eines Kleiderbügels ausreichend ist, die Auffangstange abwärts zu bewegen.

Mit der Weiterbildung nach Anspruch 6 ist es möglich, die Verbindung zwischen der Gleitschiene der oberen Auffangstange und der unteren Auffangstange möglichst übergangsfrei herzustellen.

Anhand einer Zeichnung soll die Erfindung nachfolgend näher erläutert werden.

Es zeigt:
- Fig. 1: den Querschnitt durch den Strang eines Hängeförderers in Höhe der Abgabestelle,
- Fig. 2: die Draufsicht auf die Abgabestelle gemäß Sichtpfeil II nach Fig. 1,
- Fig. 3: die Seitenansicht des Hängeförders in Höhe der Abgabe gemäß Sichtpfeile III nach Fig. 1,
- Fig. 4: den Schnitt entlang der Linie IV - IV nach Fig. 3,
- Fig. 5: das Kräftediagramm zur Berechnung der wirksamen Federkraft.

Der Einfachheit halber ist in der Zeichnung kein vollständiger Hängeförderer dargestellt, sondern nur eine einzelne Abgabestelle innerhalb des Hängeförderers. Der Hängeförderer an sich besteht aus einem umlaufenden Förderstrang 15, der beispielsweise aus einer hier nicht näher dargestellten umlaufenden Gliederkette bestehen kann, mit daran befestigten Einhängevorrichtungen 14, wie sie aus der DE-PS 39 09 002 (entspricht US Ser.No. 07/494,125) bekannt sind, in die die Bügel 21 mit ihrem Haken 21a eingehängt sind. Die Bügel 21 werden somit in einer Ebene unterhalb des Förderstranges 15 transportiert, die nachfolgend als Förderbahn 15a bezeichnet ist. Wie erkennbar ist, sind die Bügel 21 so in die Einhängevorrichtung 14 eingehängt, daß die offene Seite des Bügelhakens 21a in Richtung der Gleitschiene 1 weist. Wenn ein Bügel an der Abgabestelle A abgegeben werden soll, wird die Einhängevorrichtung 14 über den gesteuerten Auslösemagnet 13 geöffnet und der Bügel 21 fällt heraus.

An der Abgabestelle A ist ein im wesentlichen dreieckiger Ausleger 2 schwenkbar über die Bolzen 3, 3a an dem ortsfest mit dem Hängeförderer verbundenen Halter 11 angeordnet. Der Ausleger 2 besteht im wesentlichen aus der in der Draufsicht dreieckförmigen Bodenplatte 4 und dem an der Bodenplatte 4 befestigten senkrecht nach außen ragenden Aufnahmebügel 10. Auf der Bodenplatte 4 ist eine Gleitschiene 1 derart angeordnet, daß sie, knapp unterhalb der Förderbahn 15a beginnend, parallel zur Transportrichtung T des Hängeförderers in eine dazu winkelig stehende Richtung verläuft und mit ihrem Ende zur unteren Auffangstange 7 weist.

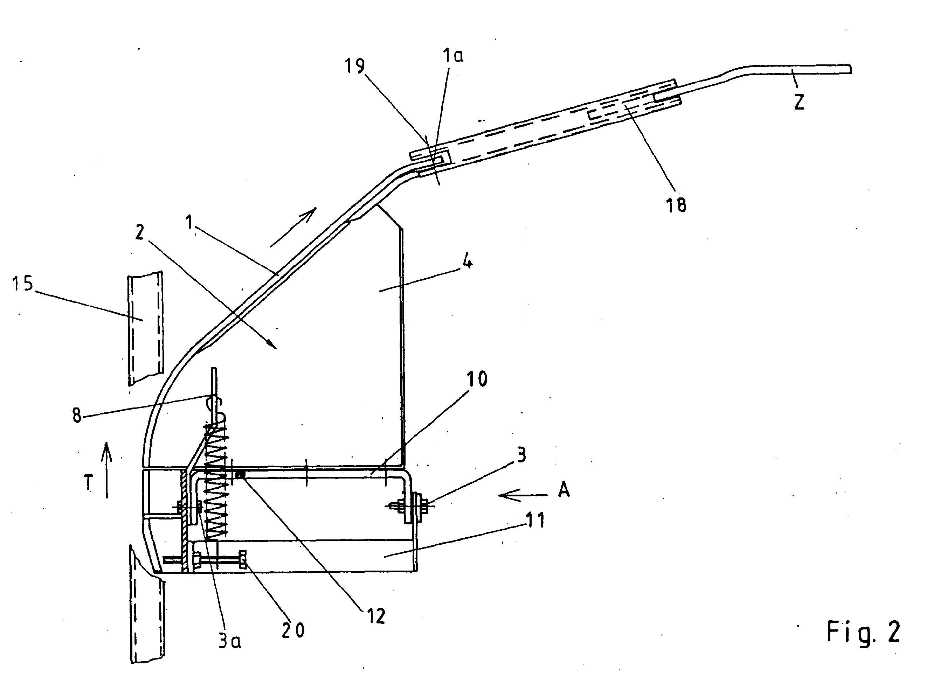

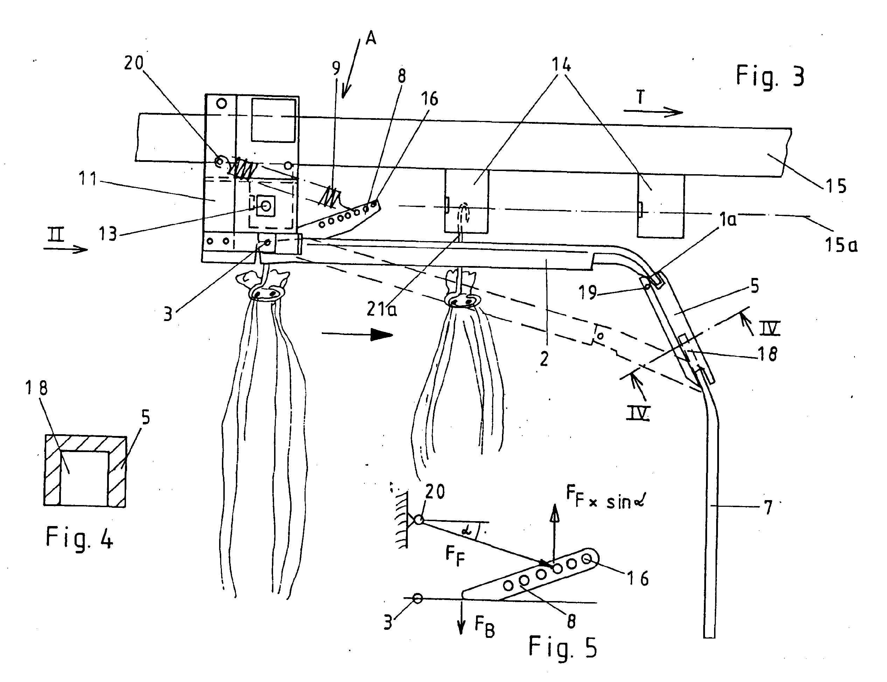

Wie Fig. 2 zeigt, ist am Aufnahmebügel 10 ein Federbügel 8 starr befestigt. Dieser Federbügel 8 weist mit seinem freien Ende schräg nach oben und ist in Längsrichtung mit einer Vielzahl hintereinander angeordneter Bohrungen 16 versehen. In eine dieser Bohrungen 16 kann die Zugfeder 9 mit ihrem einen Ende eingehakt werden. Mit ihrem anderen Ende ist die Zugfeder 9 an dem Bolzen 20 befestigt, der sich oberhalb der Spitze des Federbügels 8 am Halter 11 befindet, so daß die Zugfeder 9 schräg im Raum liegt (vgl. Fig. 3).
Über die Zugfeder 9 wird der Ausleger 2 gegen einen am Halter 11 vorgesehenen Anschlag 12 in seine Ruhestellung gezogen. Wie die Figur zeigt, besteht dieser Anschlag im einfachsten Fall aus einem Winkeleisen mit einer in den parallel zur Bodenplatte 4 verlaufenden Schenkel eingeschraubten Schraube.

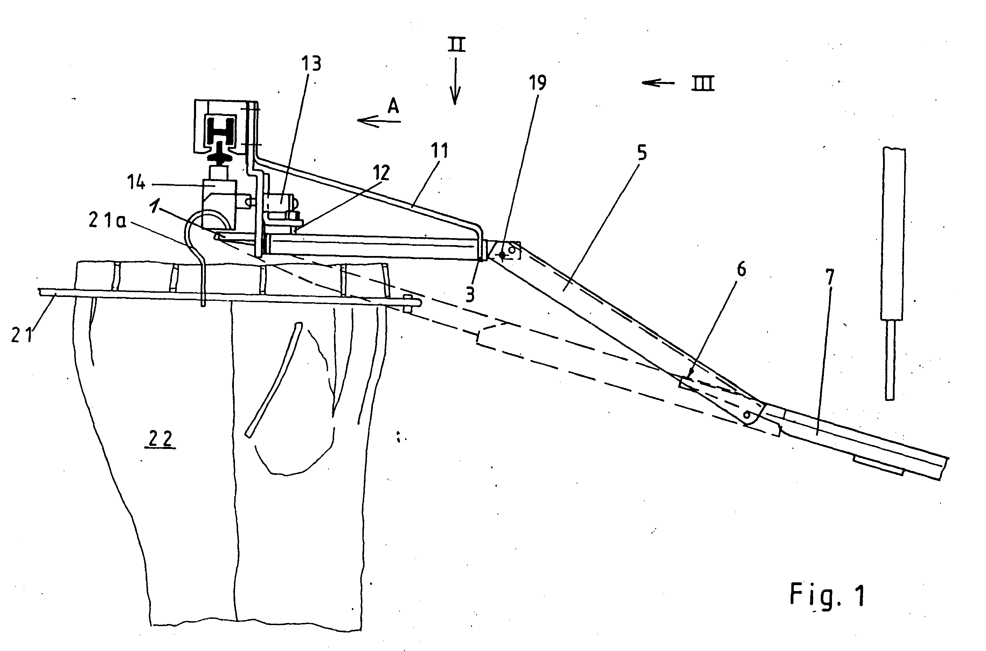

Im Ausführungsbeispiel ist die Ruhestellung in einer parallelen Ebene zur Transportrichtung T - knapp unterhalb der Transportbahn 15a - gewählt. Hierdurch liegt die Gleitschiene 1 in einer Ebene, die in etwa durch den Mittelpunkt des den Bügelhaken 21a bildenden Teilkreises verläuft. Da ein ordnungsgemäß in die Einhängevorichtung 14 eingehängter Kleiderbügel 21 parallel zur Ebene der Transportrichtung T zur Lage kommt, ist bei waagerechter Stellung des Auslegers 2 bzw. der Gleitschiene 1 ein ausreichender Abstand für die nicht abzugebenden Kleiderbügel 21 erreicht (vgl. Fig. 1). Am Ende 1a der Gleitschiene 1 ist über einen Gelenk 19 die Verbindungsschiene 5 befestigt. An ihrem anderen Ende weist die Verbindungsschiene 5 eine in ihrem Querschnitt vorgesehene Ausnehmung 18 auf, mit der die Verbindungsschiene 5 auf die Auffangstange 7 aufgesteckt werden kann. Die Ausnehmung 18 bzw. das entsprechende Ende die unteren Auffangstange 7 ist vorzugsweise so ausgebildet, daß die Verbindungsschiene 5, wenn sich der Ausleger 2, bzw. die Gleitschiene 1 in ihrer Arbeitsstellung befindet nahezu absatzfrei mit der unteren Auffangstange 7 fluchtet. In den Figuren 1 und 3 ist die Arbeitsstellung des Auslegers 2 bzw. der Gleitschiene 1 und der Verbindungsschiene 5 in gestrichelter Linie dargestellt.

Durch die Vielzahl hintereinander angeordneter Bohrungen 16 kann die auf den Ausleger 2 wirkende Kraft der Zugfeder 9 variiert werden. Dadurch kann die Kraft, die notwendig ist um den Ausleger 2 von seiner Ruhestellung in seine Arbeitsstellung zu schwenken, eingestellt werden. Fig. 5 zeigt dazu beispielhaft die zum Zeitpunkt der Bügelübergabe wirksamen Kräfte am Ausleger 2. Hierbei bedeuten:
- F_{F} =: Federkraft
- F_{B} =: Gewichtskraft des Bügels 21
- α =: Neigungswinkel der Feder 9

Wenn das Momentengleichgewicht um den Gelenkpunkt 3 gebildet wird, läßt sich der notwendige Neigungswinkel α ermitteln. Hieraus wird dann die Bohrung 16 zum Befestigen der Feder 9 gewählt, die eine möglichst nahe Realisierung der errechneten Winkels α ermöglicht. Außerdem können hierdurch die bei der Herstellung von Zugfedern unvermeidbaren Toleranzen in der Federsteife ausgeglichen werden.

Die Abgabe bzw. das Ausschleusen eines Bügels erfolgt folgendermaßen. Wenn ein bestimmter Kleiderbügel 21 an der Abgabestelle A aus der Förderbahn 15a ausgeschleust werden soll, wird der an dieser Abgabestelle ortsfest vorgesehene Auslösemagnet 13 beim Passieren der entsprechenden Einhängevorrichtung 14 aktiviert, so daß sich die Einhängevorrichtung 14 öffnet und den Kleiderbügel 21 freigibt. Dieser fällt dann aus der Einhängevorrichtung 14 heraus auf die Gleitschiene 1 des Auslegers 2. Durch das Gewicht des Bügels 21 bzw. des einhängenden Kleidungsstückes 22 wird die Gleitschine 1 bzw. der Ausleger 2 aus der Ruhestellung heraus nach unten in die Arbeitsstellung geschwenkt. Die über das Gelenk 19 an der Gleitschiene 1 angeordnete Verbindungsschiene 5 schwenkt ebenfalls nach unten mit. Durch die sich einstellende Schräge gleitet der Kleiderbügel 21 auf der Gleitschiene 1 entlang, wodurch diese sich weiter absenkt, und zwar so weit, bis die an der Gleitschiene 1 gelenkig angeordnete Verbindungsschiene 5 mit ihrer Ausnehmung 8 vollständig auf der unteren Auffangstange 7 anliegt. Dadurch stellt sich eine kontinuierliche Schräge ein und der Kleiderbügel 21 rutscht auf die untere Auffangstange 7, von wo aus er seiner weiteren Bestimmung zugeführt werden kann, d.h., er wird entweder an einen Arbeitsplatz oder aber an eine Vorratsstelle weitergegeben.
Sowie der Bügel 21 ausreichend weit von der Gleitschiene 1 entfernt ist, wird der Ausleger 2 durch die Kraft der Zugfeder 9 wieder in Richtung seiner Ruhestellung gezogen, so daß ein nachfolgender Bügel diese Abgabestelle A wieder passieren kann. Selbst bei einer hohen Fördergeschwindigkeit, die höher ist als die nur durch die Gravitationskraft bewirkte Gleitgeschwindigkeit des Kleiderbügels 21 auf der Gleitstange 1, ist ein ungestörter Transport nicht abzugebender Kleiderbügel an der Austragsstelle A möglich, da, wenn der Ausleger 1 noch nicht durch die Federkraft F_{F} zurückgeschwenkt ist, wenn ein nachfolgender Kleiderbügel die Austragsstelle A passieren soll, der Ausleger durch den hieran anstoßenden Bügel nach oben gedrückt wird.

## Patentansprüche

1. Hängeförderer für auf Bügeln (21) hängendes Transportgut mit wenigstens einer Abgabestelle (A), an der die Bügel (21) selbsttätig von der Förderbahn (15a) eines Förderstrangs in einen anderen hierzu winkelig verlaufenden Strang abgegeben werden und der Förderstrang (15) über eine geneigte Verbindungschiene (1,5,7), auf der die Bügel (21) an ihren Bügelhaken (21a) entlang gleiten, mit dem anderen Strang in Wirkverbindung steht, wobei an der Abgabestelle (A) zwischen dem Förderstrang (15) und der Auffangstange (7) des anderen Stranges eine Gleitschiene (1) schwenkbar befestigt ist, die in ihrer Ruhestellung soweit nach oben geschwenkt ist, daß im Förderstrang (15) befindliche nicht abzugebende Bügel (21) die Gleitschiene (1) ungehindert passieren können und zur Abgabe von Bügeln (21) in ihre Arbeitsstellung nach unten schwenkbar ist,
dadurch gekennzeichnet,
daß die Gleitschiene (1) unterhalb des Förderstranges (15) zwischen der Spitze des transportierten Bügelhakens (21a) und dem Bügels (21) so anordenbar ist, daß sie durch das Gewicht des abzugebenden Bügels (21) von der Ruhestellung in die Arbeitsstellung schwenkbar ist und sich dabei von der Förderbahn (15a) über die Gleitschiene (1) eine zumindest annähernd geradlinige Verbindung zur Auffangstange (7) einstellt.

2. Hängeförderer nach Anspruch 1,
dadurch gekennzeichnet,
daß zwischen der Gleitschiene (1) und der Auffangstange (7) eine Verbindungsschiene (5) angeordnet ist, die mit der Gleitschiene (1) und/oder der Auffangstange (7) gelenkig verbunden ist.

3. Hängeförderer nach Anspruch 1 oder 2,
dadurch gekennzeichnet,
daß die Gleitschiene (1) an einem schwenkbaren Ausleger (2) angeordnet ist, der über eine einenends ortsfest angelenkte Zugfeder (9) in seine Ruhestellung gezogen wird und die auf den Ausleger (2) einwirkende Federkraft einstellbar ist.

4. Hängeförderer nach Anspruch 3,
dadurch gekennzeichnet,
daß zur Einstellung der Federkraft am Ausleger (2) ein schräg nach oben verlaufender Federbügel (8) fest angeordnet ist und der Federbügel (8) in seiner Längserstreckung eine Vielzahl von Bohrungen (16) aufweist, in die die Zugfeder (9) anderenends einhängbar ist.

5. Hängeförderer nach Anspruch 4,
dadurch gekennzeichnet,
daß die Federkraft so einstellbar ist, daß der Ausleger (2) durch das auf ihn einwirkende Gewicht eines Bügels (17) in seine Arbeitsstellung bringbar ist.

6. Hängeförderer nach einem oder mehreren der vorstehenden Ansprüche,
dadurch gekennzeichnet,
daß die Verbindungsschiene (5) einenends an der Gleitschiene (1) des Auslegers (2) gelenkig befestigt ist und anderenends mit einer in ihrem Querschnittsprofil vorgesehenen Ausnehmung (18) auf die Auffangstange (7) aufsteckbar ist.

## Claims

1. A suspension conveyor for articles suspended on hangers (21) with at least one transfer point (A) at which the hangers (21) are automatically switched from the conveyor path (15a) of a conveyor track to a track running at an angle thereto and in which the conveyor track (15) is in effective connection with the other track via an inclined connecting rail (1, 5, 7) along which the hangers (21) slide by means of their hooks (21a), whereby a slide rail (1) is secured at the transfer point between the conveyor track (15) and the receiving rod (7) of the other track such that it can swivel, the said slide rail (1) in its resting position being swivelled so far upwards that hangers (21) in the conveyor track (15) which are not to be transferred to the other track can freely pass the slide rail (1), and in its working position being swivelled downwards to allow hangers (21) to be transferred,
characterised in that
the slide rail (1) beneath the conveyor track (15) between the tip of the transported hanger hook (21a) and the hanger (21) can be arranged such that it may be swivelled from its resting position to its working position through the weight of the hanger (21) to be transferred and that an at least approximately rectilinear connection is formed by the slide rail (1) between the conveyor path (15a) and the receiving rod (7).

2. A suspension conveyor according to claim 1,
characterised in that
a connecting rail (5) is arranged between the slide rail (1) and the receiving rod (7), the said connecting rail (5) being connected to the slide rail (1) and/or the receiving rod (7) in a pivotable manner.

3. A suspension conveyor according to either claim 1 or claim 2,
characterised in that
the slide rail (1) is arranged on a swivelling bracket (2) which is pulled into its resting position via a hinged tension spring (9) fixed in position at one end and that the spring force acting on the bracket (2) is adjustable.

4. A suspension conveyor according to claim 3,
characterised in that
a spring clip (8) extending upwardly and obliquely is fixed on the bracket (2) in position to adjust the spring force and that the spring clip (8) is provided along its longitudinal axis with a plurality of through-holes (16) into which the other end of the tension spring (9) can be inserted.

5. A suspension conveyor according to claim 4,
characterised in that
the spring force can be adjusted such that the bracket (2) can be brought into its working position by the weight of a hanger (17) acting on it.

6. A suspension conveyor according to any one or more of the preceding claims
characterised in that
the connecting rail (5) is secured at one end in a pivotable manner to the slide rail (1) of the bracket (2) and is attachable at its other end (18) to the receiving rod (7) by means of a recess in its cross-sectional profile.

## Revendications

1. Convoyeur aérien pour des marchandises transportées suspendues sur des cintres (21), comportant au moins une station de sortie (A), où les cintres (21) passent automatiquement de la voie de transport (15a) d'une ligne de convoyeur sur une autre ligne, dirigée en formant un angle avec la première, et où la première ligne de convoyeur (15) est reliée, en fonctionnement, à l'autre ligne au moyen d'un rail de liaison incliné (1, 5, 7) le long duquel les cintres (21) glissent sur leur crochets de cintre (21a), étant entendu qu'à la station de sortie (A), un rail de glissement (1) est fixé pivotant entre la ligne de convoyeur (15) et la barre de réception (7) de l'autre ligne, ce rail de glissement (1) étant relevé par pivotement, en position de repos, suffisamment pour que des cintres (21) se trouvant dans la ligne de convoyeur (15) et ne devant pas la quitter, puissent dépasser sans encombre ce rail de glissement (1), et ce rail de glissement (1) pouvant pivoter vers le bas, en position de travail, pour le transfert des cintres (21),
caractérisé en ce que
le rail de glissement (1) peut être disposé en-dessous de la ligne de convoyeur (15), entre la pointe du crochet de cintre (21a) transporté et le cintre (21), de telle façon que ce rail puisse pivoter, de sa position de repos dans sa position de travail, sous l'effet du poids du cintre (21) à faire sortir et qu'il se crée ainsi, depuis la ligne de convoyeur (15) jusqu'à la ligne de réception (7), par l'intermédiaire du rail de glissement (1), une liaison au moins à peu près rectiligne.

2. Convoyeur aérien suivant la revendication 1, caractérisé en ce qu'entre le rail de glissement (1) et la ligne de réception (7), est disposé un rail de liaison (5), relié par articulation au rail de glissement (1) et/ou à la ligne de réception (7).

3. Convoyeur aérien suivant la revendication 1 ou la revendication 2, caractérisé en ce que le rail de glissement (1) est disposé sur un bras pivotant (2), qui est tiré dans sa position de repos au moyen d'un ressort de traction (9) fixé à une de ses extrémités avec une articulation, et en ce que la force du ressort agissant sur le bras (2) est réglable.

4. Convoyeur aérien suivant la revendication 3, caractérisé en ce que, pour régler la force du ressort agissant sur le bras (2), un étrier à ressort (8), dirigé incliné vers le haut, est disposé de façon fixe et en ce que l'étrier à ressort (8) présente, dans son sens longitudinal, une pluralité d'alésages (16), dans lesquels on peut accrocher le ressort de traction (9) à son autre extrémité.

5. Convoyeur aérien suivant la revendication 4, caractérisé en ce que la force du ressort peut être réglée de telle façon que le bras (2) puisse être amené dans sa position de travail par le poids, agissant sur lui, d'un cintre (17).

6. Convoyeur aérien suivant l'une quelconque ou plusieurs des revendications précédentes, caractérisé en ce que le rail de liaison (5) est fixé par articulation à une de ses extrémités, au rail de glissement (1) du bras (2), et qu'à son autre extrémité, il peut s'engager dans la ligne de réception (7) grâce à un évidement (18) prévu dans sa section transversale.
